# EUROPEAN PATENT APPLICATION

(11) **EP 4 534 631 A1**
(43) Date of publication of application: **09.04.2025**
(21) Application number: 23201675.8
(22) Date of filing: 04.10.2023
(51) Int. Cl.: C10M 101/00, C10L 3/00, F01N 3/20

(54) **SULFUR FREE INTERNAL COMBUSTION ENGINE SYSTEM**

(71) Applicant: BASF Mobile Emissions Catalysts LLC, Iselin, NJ 08830 (US)
(72) Inventor: PATCHETT, Joseph, Iselin, NJ 08830 (US); HÜNNEKES, Edgar Viktor, 30173 Hannover (DE); BECKER, Jan Martin, 30173 Hannover (DE); VAARKAMP, Marius, 67056 Ludwigshafen am Rhein (DE)
(74) Representative: Altmann Stößel Dick Patentanwälte PartG mbB

(57) **Abstract**

The present invention relates to an internal combustion engine system comprising a fuel tank containing fuel, wherein the fuel is substantially free of sulfur, an internal combustion engine comprising a lubricating oil, wherein the lubricating oil is substantially free of sulfur, and a fuel supply line from the fuel tank to the internal combustion engine.

## Description

### TECHNICAL FIELD

The present invention relates to an internal combustion engine system that is free of sulfur containing compounds. Further, the invention relates to a system comprising an internal combustion engine using a sulfur free lubricating oil in combination with exhaust aftertreatment components that do not need periodic desulfation to meet performance targets. Furthermore, the invention relates to a method of operating an internal combustion engine such that it does not require operating conditions necessary to desulfate the aftertreatment components.

### INTRODUCTION

Current fuels for internal combustion engines include sulfur containing compounds as impurities. Levels of these sulfur containing impurities vary depending on regulatory limits, but are typically less than 15 ppm expressed as elemental sulfur. Even at these low concentrations, the presence of sulfur leads to the emission of substantial amounts of SO₂ and SO₃ and the corresponding sulfurous and sulfuric acids into the environment. Furthermore, the presence of sulfur in internal combustions engine systems deactivate oxidation and reduction catalysts in their exhaust gas treatment systems, such as to increase the emission of other pollutants into the environment, since they may not be effectively treated as a result of the catalyst poisoning. As a result, the current state of the art catalysts such as those e.g. developed to remove NOx via selective catalytic reduction using ammonia, require periodic removal of sulfur contaminants at temperatures greater than 500 C for times greater than 30 minutes. These de-sulfation conditions often require dedicated engine management strategies that increase fuel consumption and thus increase CO₂ plus other regulated emissions. In some cases, it is all but impossible to remove sulfur under lean conditions.

In addition to the aforementioned problems caused by sulfur contained in fuels for combustion engines, catalysts which are particularly sensitive to sulfur poisoning and that would otherwise have been attractive with regard to their performance in catalysis such as due to their activity at lower temperatures cannot be realistically used to control emissions.

Accordingly, despite the efforts which have been made for reducing emissions from internal combustion engine systems, there remains the need for the provision of cost- and/or resource effective systems displaying at least comparable if not improved efficiencies in the abatement of environmental pollutants.

To reduce CO₂ emissions, hydrogen is presently being contemplated as a replacement for carbon containing fossil fuels in internal combustion engines. Hydrogen fuel is typically free of sulfur compounds and thus the only source of sulfur remaining in the combustion system is the lubricating oil. The same holds true for the use of biologically derived fuels which are equally being contemplated as a sustainable alternative to fossil fuels. Thus, these fuels would generate CO₂ emissions at the tail pipe, but because they were produced via a biological process, the fuel carbon stems from current atmospheric CO₂ and may thus be considered CO₂ neutral from a global warming standpoint. Unlike fossil fuels, bio derived fuels are also sulfur free and exhaust after treatment systems for an internal combustion engine would also benefit from a sulfur free lubricating oil.

JP 2005320441 A discloses an ultra-low sulfur engine oil having a low sulfur content. Increased wear resistance was obtained by adding a mixture of partially boronated a alkyldiethanolamide and monoglyceride as an additive.

Currently, sulfur containing compounds are an integral component of lubricating oils, offering engine wear resistance and reducing internal friction. The removal of sulfur compounds has not been considered, because of their usefulness in providing critical performance.

### DETAILED DESCRIPTION

It was therefore the object of the present invention to provide an improved internal combustion engine system, in particular with regard to the emissions of pollutants into the environment. Said object is achieved by the internal combustion engine system of the present invention, as well as by the inventive method for the treatment of an exhaust gas stream. Thus, it has surprisingly been found that an internal combustion system producing substantially no sulfur containing pollutants may be provided by employing a fuel which is substantially free of sulfur in combination with a lubrication oil which is substantially free of sulfur. Furthermore, it has quite unexpectedly been found that such a system allows for the treatment of the exhaust gas stream emanating from the system in a highly efficient manner, in particular with regard to the type and/or amount of components which may be contained in an exhaust gas treatment system. Thus, besides the possibility of employing catalysts that would otherwise be unusable because of the high sulfur and/or temperature sensitivity of the catalysts, it has surprisingly been found that these may be used to effectively reduce and/or replace catalysts of limited availability, and in particular to replace (at least in part) platinum group metals which are currently contained in practically all exhaust gas treatment technologies. Finally, it has unexpectedly been found that in an exhaust gas treatment method according to the present invention employing an exhaust gas stream which is substantially free of sulfur, it is possible to effectively reduce fuel consumption by avoiding the generation of excessively high exhaust gas temperatures during extended periods of time, which is otherwise necessary for the removal of sulfur contamination from the exhaust gas treatment system in conventional internal combustion engine systems.

Therefore, the present invention relates to an internal combustion engine system comprising a fuel tank containing fuel, wherein the fuel is substantially free of sulfur,
an internal combustion engine comprising a lubricating oil, wherein the lubricating oil is substantially free of sulfur, and
a fuel supply line from the fuel tank to the internal combustion engine.

It is preferred that the internal combustion engine is a spark ignition engine.

Alternatively, it is preferred that the internal combustion engine is a compression ignition engine.

It is preferred that the sulfur content of the fuel is 1 ppm or less, calculated as the element, preferably is 500 ppb or less, more preferably is 100 ppb or less, more preferably is 50 ppb or less, more preferably is 10 ppb or less, more preferably is 5 ppb or less, more preferably is 1 ppb or less. Unless indicated otherwise, ppm and ppb as employed in the present description refer to weight ppm (wppm) and weight ppb (wppb), respectively.

It is preferred that the sulfur content of the lubricating oil is 500 ppm or less, preferably 100 ppm or less, more preferably 50 ppm or less, more preferably 10 ppm or less, more preferably 5 ppm or less, more preferably 1 ppm or less, more preferably 500 ppb or less, more preferably 100 ppb or less, more preferably 50 ppb or less, more preferably 10 ppb or less, more preferably 5 ppb or less, more preferably 1 ppb or less.

It is preferred that the lubricating oil is substantially free of phosphorous, preferably wherein the phosphorous content of the lubricating oil is 750 ppm or less, calculated as the element, preferably is 700 ppm or less, more preferably is 680 ppm or less, more preferably is 660 ppm or less, more preferably is 640 ppm or less, more preferably is 620 ppm or less.

It is preferred that the lubricating oil is substantially free of boron, preferably wherein the boron content of the lubricating oil is 190 ppm or less, calculated as the element, preferably is 170 ppm or less, more preferably is 150 ppm or less, more preferably is 100 ppm or less, more preferably is 50 ppm or less, more preferably is 10 ppm or less.

It is preferred that the lubricating oil is substantially free of zinc, preferably wherein the zinc content of the lubricating oil is 800 ppm or less, calculated as the element, preferably is 700 ppm or less, more preferably is 600 ppm or less, more preferably is 500 ppm or less, more preferably is 400 ppm or less, more preferably is 350 ppm or less.

It is preferred that the fuel is selected from the group consisting of methanol, ethanol, dimethyl ether, and mixtures thereof.

According to a first alternative, it is preferred that the fuel is a biofuel, and wherein the biofuel is selected from the group consisting of methanol, ethanol, biodiesel, dimethyl ether, biogas, and mixtures thereof, preferably wherein the biofuel is selected from the group consisting of methanol, ethanol, biodiesel, dimethyl ether, and mixtures thereof.

According to a second alternative, it is preferred that the fuel comprises H₂, preferably wherein the fuel comprises, more preferably consists of, liquid hydrogen or compressed hydrogen gas, more preferably compressed hydrogen gas.

In case the fuel comprises H₂, it is preferred that the fuel supply line comprises a pump downstream of the fuel tank and an expansion chamber downstream of the pump and upstream of the internal combustion engine.

In the case the fuel is a biofuel, it is preferred that the fuel is the product of a fermentation process, preferably the fermentation of biological material obtained from harvested plants and/or residual products from the processing of harvested plants.

In the case the fuel is a biofuel, it is preferred that the fuel is selected from the group consisting of transesterificated vegetable oils, transesterificated animal fats, and mixtures of two or more thereof. According to said particular and preferred embodiments, it is preferred that the vegetable oils are selected from the group consisting of palm oil, soybean oil, rapeseed oil, sunflower oil, linseed oil, rice bran oil, maize oil, olive oil, castor oil, sesame oil, pine oil, peanut oil, mustard oil, palm kernel oil, hempseed oil, coconut oil, babassu oil, cottonseed oil, jatropha oil, used cooking oils, oils derived from algae, corn oil, safflower oil, sunflower oil, almond oil, beech nut oil, brazil nut oil, cashew oil, hazelnut oil, macadamia oil, mongongo nut oil, pecan oil, pistachio oil, walnut oil, pumpkin seed oil, amaranth oil, argan oil, ben oil, date seed oil, dika oil, false flax oil, grape seed oil, hemp oil, kapok seed oil, kenaf seed oil, marula oil, meadowfoam seed oil, okra seed oil, perilla seed oil, persimmon seed oil, pequi oil, pili nut oil, poppyseed oil, pracaxi oil, quinoa oil, colza oil, radish oil, safflower oil, tigernut oil, tung oil, and mixtures of two or more thereof.

In case the fuel is selected from the group consisting of transesterificated vegetable oils, transesterificated animal fats, and mixtures of two or more thereof, it is preferred that the animal fats are selected from the group consisting of tallow, lard, grease, fish oil, butterfat, milk fat, and mixtures of two or more thereof.

It is preferred that the internal combustion engine system further comprises an exhaust gas treatment system downstream of the internal combustion engine.

In case the internal combustion engine system further comprises an exhaust gas treatment system downstream of the internal combustion engine, it is preferred that the exhaust gas treatment system comprises a catalyst component for reducing NOx.

In case the exhaust gas treatment system comprises a catalyst component for reducing NOx, it is preferred that the NOx reducing component is an SCR catalyst component, preferably wherein the SCR catalyst component is substantially free of platinum group metals, more preferably wherein the SCR catalyst component comprises 0.1 g/ft3 or less of platinum group metals, calculated as the element, more preferably 0.01 g/ft3 or less, more preferably 0.001 g/ft3 or less. Within the meaning of the present invention, the term "platinum group metals" refers to the elements Pt, Pd, Rh, Os, Ir, and Ru.

In case that the NOx reducing component is an SCR catalyst, it is preferred that the SCR catalyst component comprises one or more catalyst metals selected from the group consisting of Cu, Fe, Co, Ni, W, Ba, Mg, Sb, Nb, Ta, Mo, La, Ce, Pr, Nd, Mn, and V, preferably selected from the group consisting of Cu, Fe, Co, Ni, La, Ce, Mn, and V.

In case that the SCR catalyst component comprises one or more catalyst metals, it is preferred that the one or more catalyst metals are contained in the SCR catalyst component in elemental form and/or as one or more oxides.

In case that the NOx reducing component is an SCR catalyst, it is preferred that the one or more catalyst components comprise one or more support materials, wherein the one or more support materials are preferably selected from the group consisting of ZrO₂, Al₂O₃, SiO₂, TiO₂, La₂O₃-doped ZrO₂, CeO₂-ZrO₂ mixed oxide, La₂O₃-doped CeO₂-ZrO₂ mixed oxide, Nd₂O₃-doped CeO₂-ZrO₂ mixed oxide, Y₂O₃-doped CeO₂-ZrO₂ mixed oxide, praseodymium oxide-doped CeO₂-ZrO₂ mixed oxide, ZrO₂-doped Al₂O₃, ZrO₂-doped SiO₂, SiO₂-doped Al₂O₃, and mixtures of two or more thereof, more preferably from the group consisting of ZrO₂, Al₂O₃, La₂O₃-doped ZrO₂, CeO₂-ZrO₂ mixed oxide, La₂O₃-doped CeO₂-ZrO₂ mixed oxide, Nd₂O₃-doped CeO₂-ZrO₂ mixed oxide, Y₂O₃-doped CeO₂-ZrO₂ mixed oxide, praseodymium oxide-doped CeO₂-ZrO₂ mixed oxide, ZrO₂-doped Al₂O₃, SiO₂-doped Al₂O₃, and mixtures of two or more thereof, preferably from the group consisting of Al₂O₃, ZrO₂-doped Al₂O₃, SiO₂-doped Al₂O₃, and mixtures of two or more thereof, wherein more preferably the support material is Al₂O₃. Further, it is preferred that the one or more catalyst metals are supported on the one or more support materials.

In case that the SCR catalyst component comprises one or more catalyst metals, it is preferred that the one or more catalyst metals are contained in the SCR catalyst component as one or more bulk metal oxides.

In case that the SCR catalyst component comprises one or more catalyst metals, it is preferred that the catalyst metal is Mn and wherein the SCR catalyst component comprises Mn as one or more oxides of Mn(II), Mn(III), and Mn(IV), preferably one or more oxides selected from the group consisting of MnO, Mn₂O₃, Mn₃O₄, MnO₂, Mn(O)OH, and mixtures of two or more thereof, more preferably one or more oxides selected from the group consisting of Mn₂O₃ and Mn₃O₄, more preferably wherein the oxide is Mn₂O₃.

In case that the SCR catalyst component comprises one or more catalyst metals, it is preferred the catalyst metal is Ni and wherein the SCR catalyst component comprises NiO.

In case that the SCR catalyst component comprises one or more catalyst metals, it is preferred that the catalyst metal is V and wherein the SCR catalyst component comprises V as one or more oxides of V(II), V(III), V(IV), and V(V), preferably one or more oxides selected from the group consisting of VO, V₂O₃, VO₂, V₂O₅, and mixtures thereof, more preferably wherein the oxide is V₂O₅.

In case that the NOx reducing component is an SCR catalyst, it is preferred that the SCR catalyst component further comprises a zeolitic material, preferably a zeolitic material selected from the group consisting of zeolites having the framework structure type AFT, AFV, SAV, SFW, TSC, FAU, MFI, BEA, FER, MOR, CHA, AEI, RTH and mixtures of two or more thereof, more preferably from the group consisting of AEI, BEA, CHA and mixtures of two or more thereof, wherein more preferably the zeolitic material comprises one or more zeolites having the framework structure type AEI or CHA, including mixtures thereof. In case that the NOx reducing component is an SCR catalyst, it is preferred that the system further comprises a reductant injector positioned upstream of the SCR catalyst, wherein the reductant preferably is urea.

In case the internal combustion engine system further comprises an exhaust gas treatment system downstream of the internal combustion engine, it is preferred that the exhaust gas treatment system comprises one or more catalyst components, preferably wherein the one or more catalyst components comprise one or more platinum group metals, wherein more preferably the one or more platinum group metals are selected from the group consisting of Pt, Pd and Rh.

In case the exhaust gas treatment system comprises one or more catalyst components, it is preferred that independently from one another, the one or more catalyst components comprise the one or more platinum group metals in the range of from 0.001 to 250 g/ft3, calculated as the element, preferably in the range of from 0.01 to 30 g/ft3, more preferably in the range of from 0.1 to 10 g/ft3. In case the exhaust gas treatment system comprises one or more catalyst components , it is preferred that independently from one another, the one or more catalyst components comprise one or more catalyst metals selected from the group consisting of Cu, Fe, Co, Ni, rare earth metals, Mg, Ag, Mn, and V, preferably selected from the group consisting of Cu, Fe, Co, Ni, La, Ce, Pr, Nd, Mg, Ag, Mn, and V, more preferably selected from the group consisting of Cu, Fe, Co, Ni, La, Ce, Mn, and V. Within the meaning of the present invention, the term "rare earth metal" stands for Sc, Y, La, Ce, Pr, Nd, Pm, Sm, Eu, Gd, Tb, Dy, Ho, Er, Tm, Yb, and Lu.

In the case the one or more catalyst components comprise one or more catalyst metals, it is preferred that the one or more catalyst metals are contained in the catalyst component in elemental form and/or as one or more oxides.

In case the exhaust gas treatment system comprises one or more catalyst components, it is preferred that the one or more catalyst components comprise one or more support materials, wherein the one or more support materials are preferably selected from the group consisting of ZrO₂, Al₂O₃, SiO₂, TiO₂, La₂O₃-doped ZrO₂, CeO₂-ZrO₂ mixed oxide, La₂O₃-doped CeO₂-ZrO₂ mixed oxide, Nd₂O₃-doped CeO₂-ZrO₂ mixed oxide, Y₂O₃-doped CeO₂-ZrO₂ mixed oxide, praseodymium oxide-doped CeO₂-ZrO₂ mixed oxide, ZrO₂-doped Al₂O₃, ZrO₂-doped SiO₂, SiO₂-doped Al₂O₃, and mixtures of two or more thereof, more preferably from the group consisting of ZrO₂, Al₂O₃, La₂O₃-doped ZrO₂, CeO₂-ZrO₂ mixed oxide, La₂O₃-doped CeO₂-ZrO₂ mixed oxide, Nd₂O₃-doped CeO₂-ZrO₂ mixed oxide, Y₂O₃-doped CeO₂-ZrO₂ mixed oxide, praseodymium oxide-doped CeO₂-ZrO₂ mixed oxide, ZrO₂-doped Al₂O₃, SiO₂-doped Al₂O₃, and mixtures of two or more thereof, preferably from the group consisting of Al₂O₃, ZrO₂-doped Al₂O₃, SiO₂-doped Al₂O₃, and mixtures of two or more thereof, wherein more preferably the support material is Al₂O₃.

In case the one or more catalyst components comprise one or more support materials, it is preferred that the one or more catalyst metals are supported on the one or more support materials.

In case the exhaust gas treatment system comprises one or more catalyst components, it is preferred that the one or more catalyst components comprise a three-way conversion (TWC) catalyst component. According to said particular and preferred embodiments, it is preferred that the TWC catalyst component comprises the one or more platinum group metals in the range of from 0.001 to 100 g/ft3, calculated as the element, preferably in the range of from 0.01 to 30 g/ft3, more preferably in the range of from 0.1 to 10 g/ft3. Further, it is preferred that the TWC catalyst component comprises one or more catalyst metals selected from the group consisting of Fe, Cu, Co, Ni, rare earth metals, Mn, and V, preferably selected from the group consisting of Fe, Cu, Co, Ni, La, Ce, Pr, Nd, Mn, and V, more preferably selected from the group consisting of Fe, Cu, Co, Ni, La, Ce, Mn, and V.

In case the exhaust gas treatment system comprises one or more catalyst components, it is preferred that the one or more catalyst components comprise an ammonia oxidation (AMOx) catalyst component. According to said particular and preferred embodiments, it is preferred that the exhaust gas treatment system further comprises a selective catalytic reduction (SCR) catalyst component, wherein the AMOx catalyst component is downstream of the SCR catalyst component. Further, it is preferred that the AMOx catalyst component comprises the one or more platinum group metals in the range of from 0.001 to 50 g/ft3, calculated as the element, preferably in the range of from 0.01 to 30 g/ft3, more preferably in the range of from 0.1 to 10 g/ft3. Yet further, it is preferred that the AMOx catalyst component comprises one or more catalyst metals selected from the group consisting of Fe, Cu, Co, Ni, rare earth metals, Mn, and V, preferably selected from the group consisting of Fe, Cu, Co, Ni, La, Ce, Pr, Nd, Mn, and V, more preferably selected from the group consisting of Fe, Cu, Co, Ni, La, Ce, Mn, and V.

In case the exhaust gas treatment system comprises one or more catalyst components, it is preferred that the one or more catalyst components comprise a diesel oxidation catalyst (DOC) component.

In case the one or more catalyst components comprise a diesel oxidation catalyst (DOC) component, it is preferred that the DOC component comprises the one or more platinum group metals in the range of from 0.001 to 100 g/ft3, calculated as the element, preferably in the range of from 0.01 to 30 g/ft3, more preferably in the range of from 0.1 to 10 g/ft3.

Alternatively, it is preferred that the DOC component comprises less than 0.1 wt.-% platinum, calculated as the element, preferably less than 0.01 wt.-% platinum, more preferably less than 0.001 wt.-% platinum, more preferably wherein the DOC is free of platinum, more preferably wherein the DOC component comprises less than 0.1 wt.-% of the one or more platinum group metals, calculated as the element, more preferably less than 0.01 wt.-%, more preferably less than 0.001 wt.-%, wherein the DOC component is more preferably free of platinum group metals.

In case the one or more catalyst components comprise a diesel oxidation catalyst (DOC) component, it is preferred that the DOC component comprises one or more catalyst metals selected from the group consisting of Fe, Cu, Co, Ni, Mg, Ag, rare earth metals, Mn, and V, preferably selected from the group consisting of Fe, Cu, Co, Ni, La, Ce, Pr, Nd, Mn, and V, more preferably selected from the group consisting of Fe, Cu, Co, Ni, La, Ce, Mn, and V.

In case the DOC component comprises one or more catalyst metals, it is prepared that the catalyst metal is Mn and wherein the DOC component comprises Mn as one or more oxides of Mn(II), Mn(III), and Mn(IV), preferably one or more oxides selected from the group consisting of MnO, Mn₂O₃, Mn₃O₄, MnO₂, Mn(O)OH, and Mn-Zr mixed oxides, including mixtures of two or more thereof.

In case the exhaust gas treatment system comprises one or more catalyst components, it is preferred that the one or more catalyst components comprise a filtration device.

In case the one or more catalyst components comprise a filtration device, it is preferred that the CSF component comprises the one or more platinum group metals in the range of from 0.001 to 50 g/ft3, calculated as the element, preferably in the range of from 0.01 to 30 g/ft3, more preferably in the range of from 0.1 to 10 g/ft3.

Alternatively, it is preferred that the CSF component comprises less than 0.1 wt.-% platinum, calculated as the element, preferably less than 0.01 wt.-% platinum, more preferably less than 0.001 wt.-% platinum, more preferably wherein the CSF is free of platinum, more preferably wherein the CSF component comprises less than 0.1 wt.-% of the one or more platinum group metals, calculated as the element, more preferably less than 0.01 wt.-%, more preferably less than 0.001 wt.-%, wherein the CSF component is more preferably free of platinum group metals.

In case the one or more catalyst components comprise a filtration device, it is preferred that the CSF component comprises one or more catalyst metals selected from the group consisting of Fe, Cu, Co, Ni, rare earth metals, Mn, and V, preferably selected from the group consisting of Fe, Cu, Co, Ni, La, Ce, Pr, Nd, Mn, and V, more preferably selected from the group consisting of Fe, Cu, Co, Ni, La, Ce, Mn, and V.

In case the exhaust gas treatment system comprises one or more catalyst components, it is preferred that the one or more catalyst components comprise a lean NOx-trap (LNT) component. According to said particular and preferred embodiments, it is preferred that the LNT component comprises the one or more platinum group metals in the range of from 0.001 to 150 g/ft³, calculated as the element, preferably in the range of from 0.01 to 30 g/ft3, more preferably in the range of from 0.1 to 10 g/ft3. Further, it is preferred that the LNT component comprises one or more catalyst metals selected from the group consisting of Fe, Cu, Co, Ni, rare earth metals, Ba, Mn, and V, preferably selected from the group consisting of Fe, Cu, Co, Ni, La, Ce, Pr, Nd, Ba, Mn, and V, more preferably selected from the group consisting of Fe, Cu, Co, Ni, La, Ce, Ba, Mn, and V.

In case the exhaust gas treatment system comprises one or more catalyst components, it is preferred that the one or more catalyst components comprise a passive NOx-adsorber component.

In case the one or more catalyst components comprise a passive NOx-adsorber component, it is preferred that the passive NOx-adsorber component comprises one or more catalyst metals selected from the group consisting of rare earth metals and Ba, preferably from the group consisting of La, Ce, Pr, Nd, and Ba, more preferably selected from the group consisting of La, Ce, and Ba.

In case the internal combustion engine system further comprises an exhaust gas treatment system downstream of the internal combustion engine, it is preferred that the exhaust gas treatment system comprises a filtration device.

Alternatively, it is preferred that the exhaust gas treatment system does not contain a filtration device.

In case the internal combustion engine system further comprises an exhaust gas treatment system downstream of the internal combustion engine,, it is preferred that the exhaust gas treatment system is substantially free of platinum group metals, preferably wherein the exhaust gas treatment system comprises 0.1 g/ft3 or less of platinum group metals, calculated as the element, based on the total volume of the exhaust gas treatment components contained therein, preferably 0.01 g/ft3 or less, more preferably 0.001 g/ft3 or less.

A method for the treatment of an exhaust gas stream, wherein the exhaust gas is substantially free of sulfur, comprising
(1) providing an exhaust gas stream from an internal combustion engine system according to any one the embodiments disclosed herein;
(2) directing the exhaust gas stream provided in (1) through an exhaust gas treatment system comprising one or more catalyst components in an exhaust gas conduit.

It is preferred that in (2) the temperature in the one or more catalyst components does not exceed 630 °C, preferably does not exceed 600 °C, more preferably does not exceed 575 °C, more preferably does not exceed 550 °C, more preferably does not exceed 525 °C, more preferably does not exceed 500 °C.

It is preferred that the sulfur content of the exhaust gas is 500 ppb or less, preferably 300 ppb or less, more preferably 100 ppb or less, more preferably 50 ppb or less, preferably 10 ppb or less, more preferably 8 ppb or less, more preferably 5 ppb or less, more preferably 3 ppb or less, more preferably 1 ppb or less. In this regard, it is noted that atmospheric sulfur is also a source of sulfur in exhaust gas in view of the intake air used for combustion in the engine. Therefore, even if the fuel and lubricant oil are completely free of sulfur, sulfur may still be detected in the exhaust gas due to the presence of atmospheric sulfur.

The present invention is further illustrated by the following set of embodiments and combinations of embodiments resulting from the dependencies and back-references as indicated. In particular, it is noted that in each instance where a range of embodiments is mentioned, for example in the context of a term such as "The process of any one of embodiments 1 to 4", every embodiment in this range is meant to be explicitly disclosed for the skilled person, i.e. the wording of this term is to be understood by the skilled person as being synonymous to "The process of any one of embodiments 1, 2, 3, and 4". Further, it is explicitly noted that the following set of embodiments is not the set of claims determining the extend of protection, but represents a suitably structured part of the description to general and preferred aspects of the present invention.
1. An internal combustion engine system comprising
   a fuel tank containing fuel, wherein the fuel is substantially free of sulfur,
   an internal combustion engine comprising a lubricating oil, wherein the lubricating oil is substantially free of sulfur, and
   a fuel supply line from the fuel tank to the internal combustion engine.
2. The internal combustion engine system according to embodiment 1, wherein the internal combustion engine is a spark ignition engine.
3. The internal combustion engine system according to embodiment 1, wherein the internal combustion engine is a compression ignition engine.
4. The internal combustion engine system according to any of embodiments 1 to 3, wherein the sulfur content of the fuel is 1 ppm or less, calculated as the element, preferably is 500 ppb or less, more preferably is 100 ppb or less, more preferably is 50 ppb or less, more preferably is 10 ppb or less, more preferably is 5 ppb or less, more preferably is 1 ppb or less.
5. The internal combustion engine system according to any of embodiments 1 to 4, wherein the sulfur content of the lubricating oil is 500 ppm or less, preferably 100 ppm or less, more preferably 50 ppm or less, more preferably 10 ppm or less, more preferably 5 ppm or less, more preferably 1 ppm or less, more preferably 500 ppb or less, more preferably 100 ppb or less, more preferably 50 ppb or less, more preferably 10 ppb or less, more preferably 5 ppb or less, more preferably 1 ppb or less.
6. The internal combustion engine system according to any of embodiments 1 to 5, wherein the lubricating oil is substantially free of phosphorous, preferably wherein the phosphorous content of the lubricating oil is 750 ppm or less, calculated as the element, preferably is 700 ppm or less, more preferably is 680 ppm or less, more preferably is 660 ppm or less, more preferably is 640 ppm or less, more preferably is 620 ppm or less.
7. The internal combustion engine system according to any of embodiments 1 to 6, wherein the lubricating oil is substantially free of boron, preferably wherein the boron content of the lubricating oil is 190 ppm or less, calculated as the element, preferably is 170 ppm or less, more preferably is 150 ppm or less, more preferably is 100 ppm or less, more preferably is 50 ppm or less, more preferably is 10 ppm or less.
8. The internal combustion engine system according to any of embodiments 1 to 7, wherein the lubricating oil is substantially free of zinc, preferably wherein the zinc content of the lubricating oil is 800 ppm or less, calculated as the element, preferably is 700 ppm or less, more preferably is 600 ppm or less, more preferably is 500 ppm or less, more preferably is 400 ppm or less, more preferably is 350 ppm or less.
9. The internal combustion engine system according to any of embodiments 1 to 8, wherein the fuel is selected from the group consisting of methanol, ethanol, dimethyl ether, and mixtures thereof.
10. The internal combustion engine system according to any of embodiments 1 to 8, wherein the fuel is a biofuel, and wherein the biofuel is selected from the group consisting of methanol, ethanol, biodiesel, dimethyl ether, biogas, and mixtures thereof, preferably wherein the biofuel is selected from the group consisting of methanol, ethanol, biodiesel, dimethyl ether, and mixtures thereof.
11. The internal combustion engine system according to any of embodiments 1 to 8, wherein the fuel comprises H₂, preferably wherein the fuel comprises, more preferably consists of, liquid hydrogen or compressed hydrogen gas, more preferably compressed hydrogen gas.
12. The internal combustion engine system according to embodiment 11, wherein the fuel supply line comprises a pump downstream of the fuel tank and an expansion chamber downstream of the pump and upstream of the internal combustion engine.
13. The internal combustion engine system according to embodiment 10, wherein the fuel is the product of a fermentation process, preferably the fermentation of biological material obtained from harvested plants and/or residual products from the processing of harvested plants.
14. The internal combustion engine system according to embodiment 10 or 13, wherein the fuel is selected from the group consisting of transesterificated vegetable oils, transesterificated animal fats, and mixtures of two or more thereof.
15. The internal combustion engine system according to embodiment 14, wherein the vegetable oils are selected from the group consisting of palm oil, soybean oil, rapeseed oil, sunflower oil, linseed oil, rice bran oil, maize oil, olive oil, castor oil, sesame oil, pine oil, peanut oil, mustard oil, palm kernel oil, hempseed oil, coconut oil, babassu oil, cottonseed oil, jatropha oil, used cooking oils, oils derived from algae, corn oil, safflower oil, sunflower oil, almond oil, beech nut oil, brazil nut oil, cashew oil, hazelnut oil, macadamia oil, mongongo nut oil, pecan oil, pistachio oil, walnut oil, pumpkin seed oil, amaranth oil, argan oil, ben oil, date seed oil, dika oil, false flax oil, grape seed oil, hemp oil, kapok seed oil, kenaf seed oil, marula oil, meadowfoam seed oil, okra seed oil, perilla seed oil, persimmon seed oil, pequi oil, pili nut oil, poppyseed oil, pracaxi oil, quinoa oil, colza oil, radish oil, safflower oil, tigernut oil, tung oil, and mixtures of two or more thereof.
16. The internal combustion engine system according to embodiment 14 or 15, wherein the animal fats are selected from the group consisting of tallow, lard, grease, fish oil, butterfat, milk fat, and mixtures of two or more thereof.
17. The internal combustion engine system according to any of embodiments 1 to 16, wherein the internal combustion engine system further comprises an exhaust gas treatment system downstream of the internal combustion engine.
18. The internal combustion engine system according to embodiment 17, wherein the exhaust gas treatment system comprises a catalyst component for reducing NOx.
19. The internal combustion engine system according to embodiment 18, wherein the NOx reducing component is an SCR catalyst component, preferably wherein the SCR catalyst component is substantially free of platinum group metals, more preferably wherein the SCR catalyst component comprises 0.1 g/ft3 or less of platinum group metals, calculated as the element, more preferably 0.01 g/ft3 or less, more preferably 0.001 g/ft3 or less.
20. The internal combustion engine system according to embodiment 19, wherein the SCR catalyst component comprises one or more catalyst metals selected from the group consisting of Cu, Fe, Co, Ni, W, Ba, Mg, Sb, Nb, Ta, Mo, La, Ce, Pr, Nd, Mn, and V, preferably selected from the group consisting of Cu, Fe, Co, Ni, La, Ce, Mn, and V.
21. The internal combustion engine system according to embodiment 20, wherein the one or more catalyst metals are contained in the SCR catalyst component in elemental form and/or as one or more oxides.
22. The internal combustion engine system according to any of embodiments 19 to 22, wherein the one or more catalyst components comprise one or more support materials, wherein the one or more support materials are preferably selected from the group consisting of ZrO₂, Al₂O₃, SiO₂, TiO₂, La₂O₃-doped ZrO₂, CeO₂-ZrO₂ mixed oxide, La₂O₃-doped CeO₂-ZrO₂ mixed oxide, Nd₂O₃-doped CeO₂-ZrO₂ mixed oxide, Y₂O₃-doped CeO₂-ZrO₂ mixed oxide, praseodymium oxide-doped CeO₂-ZrO₂ mixed oxide, ZrO₂-doped Al₂O₃, ZrO₂-doped SiO₂, SiO₂-doped Al₂O₃, and mixtures of two or more thereof, more preferably from the group consisting of ZrO₂, Al₂O₃, La₂O₃-doped ZrO₂, CeO₂-ZrO₂ mixed oxide, La₂O₃-doped CeO₂-ZrO₂ mixed oxide, Nd₂O₃-doped CeO₂-ZrO₂ mixed oxide, Y₂O₃-doped CeO₂-ZrO₂ mixed oxide, praseodymium oxide-doped CeO₂-ZrO₂ mixed oxide, ZrO₂-doped Al₂O₃, SiO₂-doped Al₂O₃, and mixtures of two or more thereof, preferably from the group consisting of Al₂O₃, ZrO₂-doped Al₂O₃, SiO₂-doped Al₂O₃, and mixtures of two or more thereof, wherein more preferably the support material is Al₂O₃.
23. The internal combustion engine system according to embodiment 22, wherein the one or more catalyst metals are supported on the one or more support materials.
24. The internal combustion engine system according to embodiment 20 or 21, wherein the one or more catalyst metals are contained in the SCR catalyst component as one or more bulk metal oxides.
25. The internal combustion engine system according to any of embodiments 20 to 24, wherein the catalyst metal is Mn and wherein the SCR catalyst component comprises Mn as one or more oxides of Mn(II), Mn(III), and Mn(IV), preferably one or more oxides selected from the group consisting of MnO, Mn₂O₃, Mn₃O₄, MnO₂, Mn(O)OH, and mixtures of two or more thereof, more preferably one or more oxides selected from the group consisting of Mn₂O₃ and Mn₃O₄, more preferably wherein the oxide is Mn₂O₃.
26. The internal combustion engine system according to any of embodiments 20 to 25, wherein the catalyst metal is Ni and wherein the SCR catalyst component comprises NiO.
27. The internal combustion engine system according to any of embodiments 20 to 26, wherein the catalyst metal is V and wherein the SCR catalyst component comprises V as one or more oxides of V(II), V(III), V(IV), and V(V), preferably one or more oxides selected from the group consisting of VO, V₂O₃, VO₂, V₂O₅, and mixtures thereof, more preferably wherein the oxide is V₂O₅.
28. The internal combustion engine system according to embodiment 19 to 27, wherein the SCR catalyst component further comprises a zeolitic material, preferably a zeolitic material selected from the group consisting of zeolites having the framework structure type AFT, AFV, SAV, SFW, TSC, FAU, MFl, BEA, FER, MOR, CHA, AEI, RTH and mixtures of two or more thereof, more preferably from the group consisting of AEI, BEA, CHA and mixtures of two or more thereof, wherein more preferably the zeolitic material comprises one or more zeolites having the framework structure type AEI or CHA, including mixtures thereof.
29. The internal combustion engine system according to any of embodiments 19 to 28, wherein the system further comprises a reductant injector positioned upstream of the SCR catalyst, wherein the reductant preferably is urea.
30. The internal combustion engine system according to any of embodiments 17 to 29, wherein the exhaust gas treatment system comprises one or more catalyst components, preferably wherein the one or more catalyst components comprise one or more platinum group metals, wherein more preferably the one or more platinum group metals are selected from the group consisting of Pt, Pd and Rh.
31. The internal combustion engine system according to embodiment 30, wherein independently from one another, the one or more catalyst components comprise the one or more platinum group metals in the range of from 0.001 to 250 g/ft3, calculated as the element, preferably in the range of from 0.01 to 30 g/ft3, more preferably in the range of from 0.1 to 10 g/ft³.
32. The internal combustion engine system according to embodiment 30 or 31, wherein independently from one another, the one or more catalyst components comprise one or more catalyst metals selected from the group consisting of Cu, Fe, Co, Ni, rare earth metals, Mg, Ag, Mn, and V, preferably selected from the group consisting of Cu, Fe, Co, Ni, La, Ce, Pr, Nd, Mg, Ag, Mn, and V, more preferably selected from the group consisting of Cu, Fe, Co, Ni, La, Ce, Mn, and V.
33. The internal combustion engine system according to embodiment 32, wherein the one or more catalyst metals are contained in the catalyst component in elemental form and/or as one or more oxides.
34. The internal combustion engine system according to any of embodiments 30 to 33, wherein the one or more catalyst components comprise one or more support materials, wherein the one or more support materials are preferably selected from the group consisting of ZrO₂, Al₂O₃, SiO₂, TiO₂, La₂O₃-doped ZrO₂, CeO₂-ZrO₂ mixed oxide, La₂O₃-doped CeO₂-ZrO₂ mixed oxide, Nd₂O₃-doped CeO₂-ZrO₂ mixed oxide, Y₂O₃-doped CeO₂-ZrO₂ mixed oxide, praseodymium oxide-doped CeO₂-ZrO₂ mixed oxide, ZrO₂-doped Al₂O₃, ZrO₂-doped SiO₂, SiO₂-doped Al₂O₃, and mixtures of two or more thereof, more preferably from the group consisting of ZrO₂, Al₂O₃, La₂O₃-doped ZrO₂, CeO₂-ZrO₂ mixed oxide, La₂O₃-doped CeO₂-ZrO₂ mixed oxide, Nd₂O₃-doped CeO₂-ZrO₂ mixed oxide, Y₂O₃-doped CeO₂-ZrO₂ mixed oxide, praseodymium oxide-doped CeO₂-ZrO₂ mixed oxide, ZrO₂-doped Al₂O₃, SiO₂-doped Al₂O₃, and mixtures of two or more thereof, preferably from the group consisting of Al₂O₃, ZrO₂-doped Al₂O₃, SiO₂-doped Al₂O₃, and mixtures of two or more thereof, wherein more preferably the support material is Al₂O₃.
35. The internal combustion engine system according to embodiment 34, wherein the one or more catalyst metals are supported on the one or more support materials.
36. The internal combustion engine system according to embodiment 30, wherein the one or more catalyst components comprise a three-way conversion (TWC) catalyst component.
37. The internal combustion engine system according to embodiment 36, wherein the TWC catalyst component comprises the one or more platinum group metals in the range of from 0.001 to 100 g/ft3, calculated as the element, preferably in the range of from 0.01 to 30 g/ft3, more preferably in the range of from 0.1 to 10 g/ft3.
38. The internal combustion engine system according to embodiment 36 or 37, wherein the TWC catalyst component comprises one or more catalyst metals selected from the group consisting of Fe, Cu, Co, Ni, rare earth metals, Mn, and V, preferably selected from the group consisting of Fe, Cu, Co, Ni, La, Ce, Pr, Nd, Mn, and V, more preferably selected from the group consisting of Fe, Cu, Co, Ni, La, Ce, Mn, and V.
39. The internal combustion engine system according to embodiment 30, wherein the one or more catalyst components comprise an ammonia oxidation (AMOx) catalyst component.
40. The internal combustion engine system according to embodiment 39, wherein the exhaust gas treatment system further comprises a selective catalytic reduction (SCR) catalyst component, wherein the AMOx catalyst component is downstream of the SCR catalyst component.
41. The internal combustion engine system according to embodiment 39 or 40, wherein the AMOx catalyst component comprises the one or more platinum group metals in the range of from 0.001 to 50 g/ft3, calculated as the element, preferably in the range of from 0.01 to 30 g/ft3, more preferably in the range of from 0.1 to 10 g/ft3.
42. The internal combustion engine system according to any of embodiments 39 to 41, wherein the AMOx catalyst component comprises one or more catalyst metals selected from the group consisting of Fe, Cu, Co, Ni, rare earth metals, Mn, and V, preferably selected from the group consisting of Fe, Cu, Co, Ni, La, Ce, Pr, Nd, Mn, and V, more preferably selected from the group consisting of Fe, Cu, Co, Ni, La, Ce, Mn, and V.
43. The internal combustion engine system according to embodiment 30, wherein the one or more catalyst components comprise a diesel oxidation catalyst (DOC) component.
44. The internal combustion engine system according to embodiment 43, wherein the DOC component comprises the one or more platinum group metals in the range of from 0.001 to 100 g/ft3, calculated as the element, preferably in the range of from 0.01 to 30 g/ft3, more preferably in the range of from 0.1 to 10 g/ft3.
45. The internal combustion engine system according to embodiment 43, wherein the DOC component comprises less than 0.1 wt.-% platinum, calculated as the element, preferably less than 0.01 wt.-% platinum, more preferably less than 0.001 wt.-% platinum, more preferably wherein the DOC is free of platinum, more preferably wherein the DOC component comprises less than 0.1 wt.-% of the one or more platinum group metals, calculated as the element, more preferably less than 0.01 wt.-%, more preferably less than 0.001 wt.-%, wherein the DOC component is more preferably free of platinum group metals.
46. The internal combustion engine system according to any of embodiments 43 to 45, wherein the DOC component comprises one or more catalyst metals selected from the group consisting of Fe, Cu, Co, Ni, Mg, Ag, rare earth metals, Mn, and V, preferably selected from the group consisting of Fe, Cu, Co, Ni, La, Ce, Pr, Nd, Mn, and V, more preferably selected from the group consisting of Fe, Cu, Co, Ni, La, Ce, Mn, and V.
47. The internal combustion engine system according to embodiment 46, wherein the catalyst metal is Mn and wherein the DOC component comprises Mn as one or more oxides of Mn(II), Mn(III), and Mn(IV), preferably one or more oxides selected from the group consisting of MnO, Mn₂O₃, Mn₃O₄, MnO₂, Mn(O)OH, and Mn-Zr mixed oxides, including mixtures of two or more thereof.
48. The internal combustion engine system according to embodiment 30, wherein the one or more catalyst components comprise a filtration device.
49. The internal combustion engine system according to embodiment 48, wherein the CSF component comprises the one or more platinum group metals in the range of from 0.001 to 50 g/ft3, calculated as the element, preferably in the range of from 0.01 to 30 g/ft3, more preferably in the range of from 0.1 to 10 g/ft3.
50. The internal combustion engine system according to embodiment 48, wherein the CSF component comprises less than 0.1 wt.-% platinum, calculated as the element, preferably less than 0.01 wt.-% platinum, more preferably less than 0.001 wt.-% platinum, more preferably wherein the CSF is free of platinum, more preferably wherein the CSF component comprises less than 0.1 wt.-% of the one or more platinum group metals, calculated as the element, more preferably less than 0.01 wt.-%, more preferably less than 0.001 wt.-%, wherein the CSF component is more preferably free of platinum group metals.
51. The internal combustion engine system according to any of embodiments 48 to 50, wherein the CSF component comprises one or more catalyst metals selected from the group consisting of Fe, Cu, Co, Ni, rare earth metals, Mn, and V, preferably selected from the group consisting of Fe, Cu, Co, Ni, La, Ce, Pr, Nd, Mn, and V, more preferably selected from the group consisting of Fe, Cu, Co, Ni, La, Ce, Mn, and V.
52. The internal combustion engine system according to embodiment 30, wherein the one or more catalyst components comprise a lean NOx-trap (LNT) component.
53. The internal combustion engine system according to embodiment 52, wherein the LNT component comprises the one or more platinum group metals in the range of from 0.001 to 150 g/ft3, calculated as the element, preferably in the range of from 0.01 to 30 g/ft3, more preferably in the range of from 0.1 to 10 g/ft3.
54. The internal combustion engine system according to embodiment 52 or 53, wherein the LNT component comprises one or more catalyst metals selected from the group consisting of Fe, Cu, Co, Ni, rare earth metals, Ba, Mn, and V, preferably selected from the group consisting of Fe, Cu, Co, Ni, La, Ce, Pr, Nd, Ba, Mn, and V, more preferably selected from the group consisting of Fe, Cu, Co, Ni, La, Ce, Ba, Mn, and V.
55. The internal combustion engine system according to embodiment 30, wherein the one or more catalyst components comprise a passive NOx-adsorber component.
56. The internal combustion engine system according to embodiment 55, wherein the passive NOx-adsorber component comprises one or more catalyst metals selected from the group consisting of rare earth metals and Ba, preferably from the group consisting of La, Ce, Pr, Nd, and Ba, more preferably selected from the group consisting of La, Ce, and Ba.
57. The internal combustion engine system according to any of embodiments 17 to 56, wherein the exhaust gas treatment system comprises a filtration device.
58. The internal combustion engine system according to any of embodiments 17 to 56, wherein the exhaust gas treatment system does not contain a filtration device.
59. The internal combustion engine system according to any of embodiments 17 to 58, wherein the exhaust gas treatment system is substantially free of platinum group metals, preferably wherein the exhaust gas treatment system comprises 0.1 g/ft3 or less of platinum group metals, calculated as the element, based on the total volume of the exhaust gas treatment components contained therein, preferably 0.01 g/ft3 or less, more preferably 0.001 g/ft³ or less.
60. A method for the treatment of an exhaust gas stream, wherein the exhaust gas is substantially free of sulfur, comprising
   (1) providing an exhaust gas stream from an internal combustion engine system according to any one of claims 1 to 59;
   (2) directing the exhaust gas stream provided in (1) through an exhaust gas treatment system comprising one or more catalyst components in an exhaust gas conduit.
61. The method according to embodiment 60, wherein in (2) the temperature in the one or more catalyst components does not exceed 630 °C, preferably does not exceed 600 °C, more preferably does not exceed 575 °C, more preferably does not exceed 550 °C, more preferably does not exceed 525 °C, more preferably does not exceed 500 °C.
62. The method according to embodiment 60 or 61, wherein the sulfur content of the exhaust gas is 500 ppb or less, preferably 300 ppb or less, more preferably 100 ppb or less, more preferably 50 ppb or less, preferably 10 ppb or less, more preferably 8 ppb or less, more preferably 5 ppb or less, more preferably 3 ppb or less, more preferably 1 ppb or less.

### CITED LITERATURE:

- JP 2005320441 A

## Claims

1. An internal combustion engine system comprising
a fuel tank containing fuel, wherein the fuel is substantially free of sulfur,
an internal combustion engine comprising a lubricating oil, wherein the lubricating oil is substantially free of sulfur, and
a fuel supply line from the fuel tank to the internal combustion engine.

2. The internal combustion engine system according to claim 1, wherein the sulfur content of the fuel is 1 ppm or less.

3. The internal combustion engine system according to claim 1 or 2, wherein the sulfur content of the lubricating oil is 500 ppm or less.

4. The internal combustion engine system according to any of claims 1 to 3, wherein the fuel is selected from the group consisting of methanol, ethanol, dimethyl ether, and mixtures thereof.

5. The internal combustion engine system according to any of claims 1 to 3, wherein the fuel is a biofuel.

6. The internal combustion engine system according to any of claims 1 to 3, wherein the fuel comprises H₂.

7. The internal combustion engine system according to any of claims 1 to 6, wherein the internal combustion engine system further comprises an exhaust gas treatment system downstream of the internal combustion engine.

8. The internal combustion engine system according to claim 7, wherein the exhaust gas treatment system comprises a catalyst component for reducing NOx.

9. The internal combustion engine system according to claim 8, wherein the NOx reducing component is an SCR catalyst component.

10. The internal combustion engine system according to claim 9, wherein the SCR catalyst component comprises one or more catalyst metals selected from the group consisting of Cu, Fe, Co, Ni, W, Ba, Mg, Sb, Nb, Ta, Mo, La, Ce, Pr, Nd, Mn, and V.

11. The internal combustion engine system according to any of claims 7 to 10, wherein the exhaust gas treatment system comprises one or more catalyst components.

12. The internal combustion engine system according to claim 11, wherein independently from one another, the one or more catalyst components comprise one or more catalyst metals selected from the group consisting of Cu, Fe, Co, Ni, rare earth metals, Mg, Ag, Mn, and V.

13. The internal combustion engine system according to claim 11, wherein the one or more catalyst components comprise an ammonia oxidation (AMOx) catalyst component.

14. The internal combustion engine system according to claim 11, wherein the one or more catalyst components comprise a diesel oxidation catalyst (DOC) component.

15. A method for the treatment of an exhaust gas stream, wherein the exhaust gas is substantially free of sulfur, comprising
(1) providing an exhaust gas stream from an internal combustion engine system according to any one of claims 1 to 14;
(2) directing the exhaust gas stream provided in (1) through an exhaust gas treatment system comprising one or more catalyst components in an exhaust gas conduit.
